# FASCICULE DE BREVET EUROPEEN

(11) **EP 4 228 911 B1**
(45) Date de publication et mention de la délivrance du brevet: **12.08.2026**
(21) Numéro de dépôt: 21778116.0
(22) Date de dépôt: 17.09.2021
(51) Int. Cl.: B60K 1/04, B60K 11/02, B60K 11/04, B60K 1/00, H01M 6/50, H01M 10/613, H01M 10/625, H01M 10/6568, H01M 10/66, H01M 50/249

(54) **VÉHICULE COMPRENANT UNE BATTERIE ÉLECTRIQUE ET UN CIRCUIT DE REFROIDISSEMENT DE CELLE-CI**
FAHRZEUG MIT EINER ELEKTRISCHEN BATTERIE UND EINEM KÜHLKREISLAUF DAFÜR
VEHICLE COMPRISING AN ELECTRIC BATTERY AND A CIRCUIT FOR COOLING SAME

(30) Priorité: 16.10.2020 FR 2010593
(43) Date de publication de la demande: 23.08.2023
(73) Titulaire: Renault s.a.s, 92100 Boulogne Billancourt (FR)
(72) Inventeur: BODIN, Geoffrey, 91310 Montlhery (FR); CORONT-DUCLUZEAU, Charles, 78210 St Cyr L'Ecole (FR)
(86) Numéro de dépôt international: PCT/EP2021/075706
(87) Numéro de publication internationale: WO 2022/078711

(56) Documents cités:
- CA-A1- 3 129 359
- FR-A1- 3 055 926
- US-A- 5 624 003
- US-A1- 2016 355 100
- US-A1- 2020 079 208

## Description

La présente invention concerne un véhicule comprenant une batterie électrique et un circuit de refroidissement de celle-ci.

Dans le cadre de l'hybridation de certains véhicules automobiles, une batterie électrique est fixée sous la caisse de ces véhicules et se retrouve ainsi en vis-à-vis de la route. Cette batterie, lorsqu'elle est utilisée, a tendance à chauffer et il est nécessaire de pouvoir la refroidir régulièrement et efficacement. A cette fin, il est préférable d'utiliser un circuit de refroidissement à eau qui est plus performant qu'un circuit de refroidissement à air.

Or, les espaces disponibles dans le compartiment moteur sont de moins en moins nombreux, rendant très difficile voire impossible l'installation du circuit de refroidissement de la batterie électrique dans ledit compartiment moteur.

US 2016/355100 A1 divulgue un véhicule comprenant un plancher, une batterie électrique fixée sous ledit plancher et un circuit de refroidissement liquide de ladite batterie.

Un véhicule selon l'invention comprend une batterie électrique fixée sous la caisse, ainsi qu'un circuit de refroidissement de ladite batterie dont la localisation au sein dudit véhicule a été optimisée afin de pouvoir assurer pleinement cette fonction de refroidissement.

Afin de bien comprendre le positionnement des différentes pièces impliquées dans un véhicule selon l'invention, la description est réalisée en faisant référence à un repère orthonormé direct XYZ lié au véhicule et dans lequel X est un axe longitudinal avant-arrière du véhicule orienté vers l'arrière, Y est un axe transversal orienté vers la droite du véhicule et Z est un axe vertical dirigé vers le haut.

L'invention a pour objet un véhicule comprenant un plancher, une batterie électrique de tension à vide inférieure ou égale à 48V, fixée sous ledit plancher et un circuit de refroidissement liquide de ladite batterie.

Selon l'invention, le circuit de refroidissement est fixé sous le plancher du véhicule à côté de la batterie. L'originalité d'un véhicule selon l'invention est de rapprocher le plus possible le circuit de refroidissement de la batterie sous le plancher du véhicule, afin notamment de limiter les pertes thermiques. Toute la fonction « batterie » incluant son fonctionnement et son refroidissement, se trouve ainsi regroupée au même endroit sous le véhicule sans occuper une place importante. Avantageusement, le circuit de refroidissement est agencé sous le plancher du véhicule de manière à ne créer aucune protubérance sous le véhicule suivant Z et/ou dans un plan XY, qui serait susceptible d'accroitre l'encombrement dudit véhicule. Un circuit de refroidissement liquide signifie que ledit circuit est basé sur la circulation d'un liquide de refroidissement pouvant être de l'eau.

Selon une caractéristique possible de l'invention, la batterie électrique et le circuit de refroidissement sont fixés sous une zone sensiblement centrale du plancher. De cette manière, une telle localisation centralisée permet de souligner la proximité qui existe entre la batterie et son circuit de refroidissement. L'adjectif « centrale » est à considérer par rapport à un axe longitudinal du véhicule. Le terme « sensiblement » signifie que la zone peut être décalée suivant un axe longitudinal X du véhicule au maximum de plus ou moins 50 cm par rapport à une position rigoureusement centrale.

Selon une caractéristique possible de l'invention, la batterie électrique et le circuit de refroidissement sont placés côte à côte le long d'un axe transversal Y du véhicule. De cette manière, la batterie électrique et le circuit de refroidissement occupent un espace restreint sous le véhicule, ayant une amplitude limitée suivant un axe longitudinal du véhicule.

Selon l'invention, le circuit de refroidissement à eau comprend un bocal d'eau doté d'un bouchon, le bocal étant placé sous le plancher de sorte que ledit bouchon corresponde à sa partie la plus haute, tout en demeurant sous ledit plancher. De cette manière, le bocal ne dépasse pas du plancher et le bouchon peut être retiré à tout moment pour procéder au remplissage du bocal en cas de nécessité. La présence de ce bocal signifie que le circuit de refroidissement est totalement autonome dans le véhicule, puisqu'il possède sa propre réserve d'eau et donc qu'il n'a pas besoin de se connecter à un autre circuit d'eau du véhicule.

Selon l'invention, le véhicule comprend un habitacle, le plancher étant doté d'une trappe accessible depuis ledit habitacle et placée au droit du bocal pour permettre d'accéder au bouchon dudit bocal. De cette manière, il devient facile d'alimenter en eau le bocal du circuit de refroidissement de la batterie, sans avoir à se contorsionner sous le véhicule et/ou sans avoir à démonter préalablement des pièces de structure du véhicule pour accéder audit bocal.

Selon l'invention, la trappe est mobile en rotation entre une position de fermeture pour laquelle elle est dans la continuité du plancher et une position d'ouverture pour laquelle elle saille du plancher à l'intérieur de l'habitacle. Il s'agit d'une variante de réalisation, qui est parfaitement adaptée à un véhicule selon l'invention, mais qui n'est nullement limitative. Une trappe à coulissement pourrait également convenir. De même, une trappe sous la forme d'un bouchon qui serait vissé au plancher et qui pourrait facilement être retiré pourrait être une solution à retenir dans le cadre de l'invention.

Selon une caractéristique possible de l'invention, le circuit de refroidissement comprend une pompe à eau et un chiller. La pompe permet de faire circuler l'eau dans le circuit, et le chiller permet de refroidir l'eau de refroidissement encore chaude en provenance de la batterie électrique.

Selon une caractéristique possible de l'invention, le bocal, le chiller et la pompe à eau sont en communication fluidique au moyen de tubulures solides et rigides placées sous le plancher, dans un espace compris entre ledit plancher et le point le plus bas de la batterie. En effet, le circuit de refroidissement doit conserver une certaine compacité en évitant notamment que les tubulures ne débordent horizontalement et/ou verticalement sous le véhicule, et n'accroissent l'encombrement dudit véhicule.

Selon une caractéristique possible de l'invention, la batterie est maintenue sous le plancher au moyen d'une pièce support sous la forme d'une cage présentant des segments s'étendant selon un axe longitudinal X du véhicule et des segments s'étendant selon un axe transversal Y du véhicule. Il est important que la batterie soit bien arrimée sous le véhicule, sans risque de tomber, ni même de bouger. Cette pièce support colle au plus près de la batterie sans laisser subsister de jeu avec celle-ci. De plus, les ouvertures créées entre les segments longitudinaux et les segments latéraux de la pièce support permettent à l'air ambiant de refroidir la batterie à travers ces ouvertures.

Selon une caractéristique possible de l'invention, la batterie électrique et le circuit de refroidissement sont fixés sous le plancher dans un espace délimité par deux traverses.

Un véhicule selon l'invention présente l'avantage de posséder une batterie électrique fixée sous le plancher, ainsi qu'un circuit de refroidissement de ladite batterie qui est pleinement efficace, grâce à une localisation judicieuse de ce circuit de refroidissement sous ledit plancher. Il a de plus l'avantage de posséder cette fonctionnalité supplémentaire en conservant un poids et un encombrement constants. Il présente enfin l'avantage de posséder un circuit de refroidissement qui peut être facilement et rapidement alimenté en eau, sans avoir à effectuer des manipulations contraignantes et/ou à utiliser un outillage particulier.

On donne ci-après une description détaillée d'un mode de réalisation préféré d'un véhicule selon l'invention en se référant aux figures suivantes :
[Fig. 1] représente une vue du dessous d'un véhicule selon l'invention,
[Fig. 2] représente une vue en perspective du dessous d'un véhicule selon l'invention,
[Fig. 3] représente une vue en perspective du dessus d'un plancher d'un véhicule selon l'invention, montrant une trappe d'accès au bocal de liquide de refroidissement,
[Fig. 4] représente une vue en perspective d'un circuit de refroidissement d'une batterie électrique d'un véhicule selon l'invention,
[Fig. 5] représente une vue schématique du circuit de refroidissement de la figure 4.

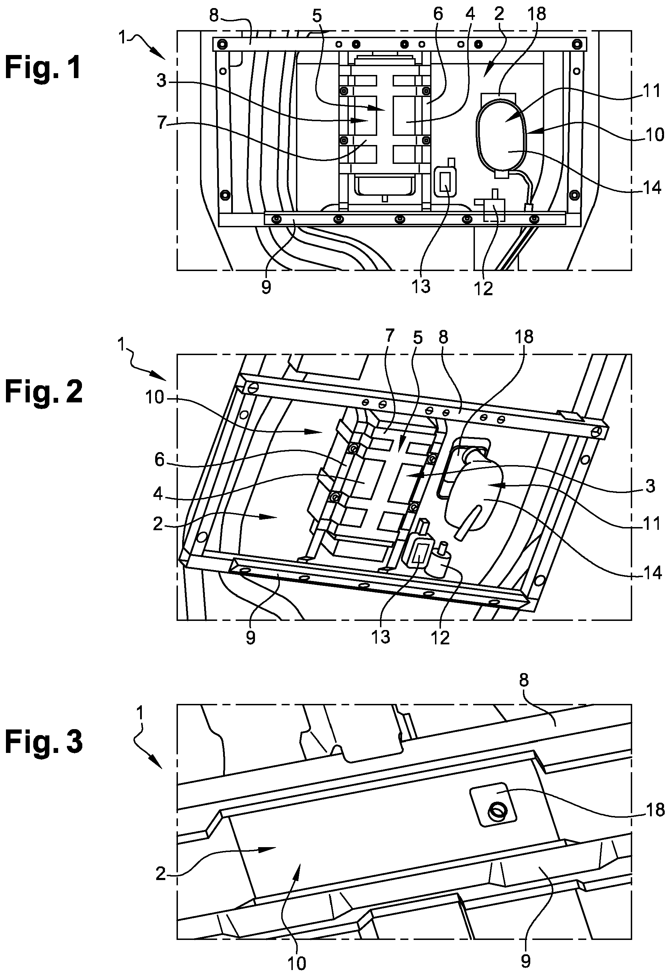

En se référant aux figures 1 et 2, un véhicule 1 selon l'invention comprend une caisse possédant un plancher 2, ladite caisse délimitant un habitacle dans lequel peuvent venir s'asseoir un conducteur et au moins un passager. Ce véhicule est un véhicule hybride comprenant une batterie électrique 3, par exemple de 48V, fixée sous le plancher 2.

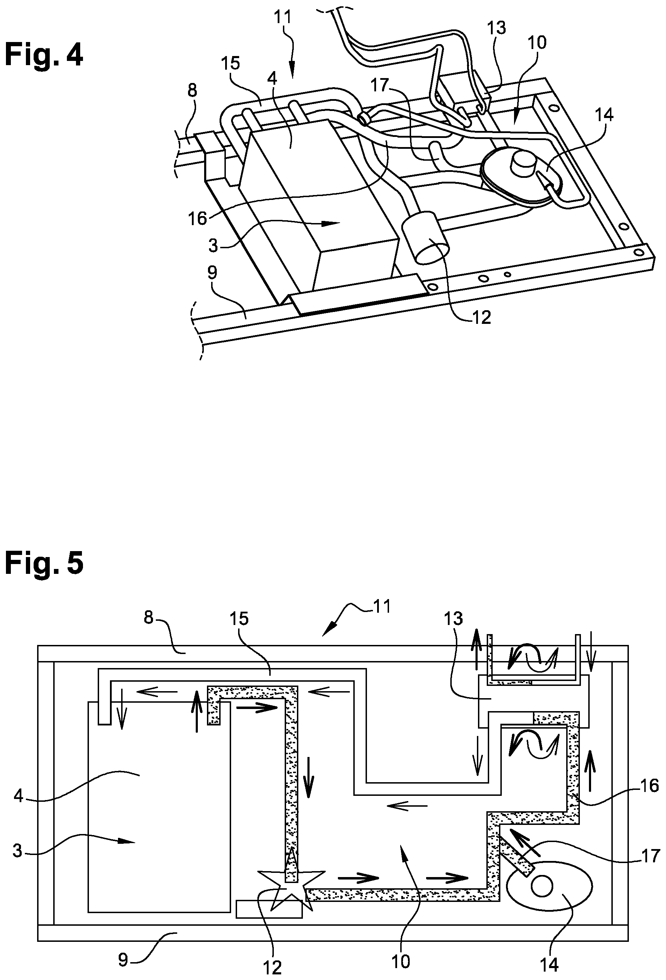

En se référant aux figures 2 et 4, la batterie 3 est logée dans un boitier 4 allongé de forme parallélépipédique, ledit boitier 4 étant fixé sous le plancher 2 de manière que son axe longitudinal soit parallèle à un axe longitudinal X du véhicule 1. Le boitier 4 enfermant la batterie 3 électrique est arrimé au plancher 2 par l'intermédiaire d'une pièce support 5 se présentant sous la forme d'une cage de forme parallélépipédique. Cette pièce support 5 se compose de segments rectilignes longitudinaux 6 s'étendant parallèlement à un axe longitudinal X du véhicule et de segments rectilignes transversaux 7 s'étendant parallèlement à un axe transversal Y du véhicule 1, lesdits segments longitudinaux 6 et transversaux 7 s'entrecroisant. Cette pièce support 5 est préférentiellement réalisée dans un matériau métallique. L'entrecroisement des segments longitudinaux 6 et transversaux 7 crée des ouvertures entre lesdits segments 6, 7 permettant à l'air ambiant de refroidir la batterie 3 à travers ces ouvertures

En se référant aux figures 1, 2, 3, 4 et 5, le boitier 4 de la batterie électrique 3 est fixé sous le plancher 2 du véhicule 1, dans une zone 10 dudit plancher 2 délimitée par deux traverses 8, 9 parallèles s'étendant selon un axe transversal Y du véhicule 1. Préférentiellement, cette zone 10 est de forme rectangulaire, et est sensiblement centrale au sein dudit plancher 2, en considérant un axe longitudinal X du véhicule 1.

En se référant aux figures 1, 2, 4 et 5, la particularité d'un véhicule 1 selon l'invention, est qu'un circuit de refroidissement 11 de ladite batterie 3 est placé dans cette zone 10, à proximité immédiate de la batterie électrique 3.

En se référant aux figures 1, 2, 4 et 5, le circuit de refroidissement 11 est réalisé avec un liquide de refroidissement qui est avantageusement de l'eau, et comprend une pompe 12 à eau, un chiller 13 et un bocal 14 d'eau. Ces différents éléments 12, 13, 14 constitutifs du circuit de refroidissement 11 ainsi que la batterie 3 sont en communication fluidique par différentes tubulures 15, 16, 17 préférentiellement solides et rigides. La pompe à eau 12, le chiller 13 et le bocal 14 sont inscrits dans un même plan moyen XY qui est horizontal lorsque le véhicule 1 repose sur un sol horizontal. Les différentes tubulures 15, 16, 17 impliquées dans le circuit de refroidissement 11, sont incluses dans l'espace situé sous le véhicule 1 et compris entre le plancher 2 et le point le plus bas du boitier 4 de la batterie 3. De cette manière, elles contribuent à ne pas accroitre les dimensions du circuit de refroidissement 11 suivant un axe vertical Z. De même, ces tubulures 15, 16, 17 sont majoritairement incluses dans un plan horizontal XY délimitant la zone 10 du plancher 2 dans laquelle est placée la batterie 3.

En se référant aux figures 2 et 3, le bocal 14 comprend un bouchon et est placé sous le plancher 2 de sorte que ledit bouchon constitue la partie la plus haute du bocal tout en demeurant sous le niveau dudit plancher 2. Une trappe 18 réalisée dans le plancher 2 et accessible depuis l'habitacle du véhicule 1, est placée au-dessus et au droit du bouchon du bocal 14. Dans le cas où la réserve d'eau devenait insuffisante dans le bocal 14, il devient alors possible d'ouvrir cette trappe 18 depuis l'habitacle, pour accéder au bouchon et le retirer, afin de procéder à une opération de remplissage en eau dudit bocal 14. Cette trappe 18 peut par exemple être constituée par un volet monté pivotant dans le plancher 2, entre une position de fermeture pour laquelle il est dans la parfaite continuité du plancher 2 et une position d'ouverture pour laquelle il saille dudit plancher 2 à l'intérieur de l'habitacle. Elle peut également être constituée par un volet coulissant se déplaçant entre la position de fermeture et une position d'ouverture. Elle peut aussi se présenter sous la forme d'un bouchon apte à se dévisser pour pouvoir être retiré du plancher 2 et ainsi accéder au bocal 14.

Le circuit de refroidissement 11 est autonome au sein du véhicule 1 car il possède sa propre réserve d'eau à travers le bocal 14 et n'a donc pas à venir se connecter à un autre circuit de circulation d'eau dudit véhicule 1.

En se référant à la figure 5, ce circuit de refroidissement est également réalisé sous la forme d'une boucle fermée. Ainsi, de l'eau refroidie par le chiller 13 est envoyée via une première tubulure 15 dans le boitier 4 de la batterie 3 où elle abaisse la température de ladite batterie 3 qui a préalablement chauffé. Durant cette phase, l'eau présente dans le boitier 4 se réchauffe au contact de la batterie 3 chaude, et ressort du boitier 4 à une certaine température. Elle est alors envoyée via une deuxième tubulure 16 vers le chiller 13 où elle va être refroidie au contact d'une source froide dudit chiller 13 avant d'être à nouveau acheminée vers le boitier 4 de la batterie 3, et ainsi de suite. Si de l'eau venait à manquer dans ce circuit de refroidissement 11, le bocal 14 pourrait alors fournir sur commande l'appoint en eau à ce circuit 11, via une troisième tubulure 17. La circulation d'eau dans le circuit de refroidissement 11 est assurée par l'intermédiaire d'une activation de la pompe 12 à eau.

## Revendications

1. Véhicule (1) comprenant un habitacle, un plancher (2), et une batterie (3) électrique de tension à vide inférieure ou égale à 48V, fixée sous ledit plancher (2) et un circuit de refroidissement (11) liquide de ladite batterie (3),
le circuit de refroidissement (11) est fixé sous le plancher (2) du véhicule (1) à côté de la batterie (3), **caractérisé en ce que** ledit circuit de refroidissement (11) à eau comprend un bocal (14) d'eau doté d'un bouchon, et **en ce que** le bocal (14) est placé sous le plancher (2) de sorte que ledit bouchon corresponde à sa partie la plus haute en demeurant sous ledit plancher (2),
et **en ce que** le plancher (2) est doté d'une trappe (18) accessible depuis ledit habitacle et placée au droit du bocal (14) pour permettre d'accéder au bouchon dudit bocal (14), ladite trappe (18) étant mobile en rotation entre une position de fermeture pour laquelle elle est dans la continuité du plancher (2) et une position d'ouverture pour laquelle elle saille du plancher (2) à l'intérieur de l'habitacle.

2. Véhicule selon la revendication 1, **caractérisé en ce que** la batterie électrique (3) et le circuit de refroidissement (11) sont fixés sous une zone sensiblement centrale du plancher (2).

3. Véhicule selon l'une quelconque des revendications 1 ou 2, **caractérisé en ce que** la batterie électrique (3) et le circuit de refroidissement (11) sont placés côte à côte le long d'un axe transversal Y du véhicule (1).

4. Véhicule selon l'une quelconque des revendications 1 à 3, **caractérisé en ce que** le circuit de refroidissement (11) comprend une pompe (12) à eau et un chiller (13).

5. Véhicule selon l'une quelconque des revendications 1 à 4, **caractérisé en ce que** le bocal (14), le chiller (13) et la pompe (12) à eau sont en communication fluidique au moyen de tubulures (15, 16, 17) solides et rigides placées sous le plancher dans un espace compris entre ledit plancher (2) et le point le plus bas de la batterie (3).

6. Véhicule selon l'une quelconque des revendications 1 à 5, **caractérisé en ce que** la batterie (3) est maintenue sous le plancher (2) au moyen d'une pièce support (5) sous la forme d'une cage présentant des segments (6) s'étendant selon un axe longitudinal X du véhicule et des segments (7) s'étendant selon un axe transversal Y du véhicule.

7. Véhicule selon l'une quelconque des revendications 1 à 6, **caractérisé en ce que** la batterie électrique (3) et le circuit de refroidissement (11) sont fixés sous le plancher (2) dans un espace délimité par deux traverses (8, 9).

## Patentansprüche

1. Fahrzeug (1), umfassend einen Fahrgastraum, einen Boden (2) und eine elektrische Batterie (3) mit einer Leerlaufspannung kleiner oder gleich 48 V, die unter dem Boden (2) befestigt ist, und einen Flüssigkeitskühlkreislauf (11) zur Kühlung der Batterie (3),
wobei der Kühlkreislauf (11) unter dem Boden (2) des Fahrzeugs (1) neben der Batterie (3) befestigt ist, **dadurch gekennzeichnet, dass** der Wasserkühlkreislauf (11) einen mit einem Verschluss versehenen Wasserbehälter (14) umfasst und dass der Behälter (14) unter dem Boden (2) so angeordnet ist, dass der Verschluss seinem höchsten Teil entspricht, wobei er unter dem Boden (2) bleibt,
und dass der Boden (2) mit einer Klappe (18) versehen ist, die von dem Fahrgastraum aus zugänglich ist und lotrecht zu dem Behälter (14) angeordnet ist, um das Zugreifen auf den Verschluss des Behälters (14) zu ermöglichen, wobei die Klappe (18) zwischen einer Schließstellung, in der sie bündig mit dem Boden (2) ist, und einer Öffnungsstellung, in der sie vom Boden (2) in den Fahrgastraum hineinragt, drehbeweglich ist.

2. Fahrzeug nach Anspruch 1, **dadurch gekennzeichnet, dass** die elektrische Batterie (3) und der Kühlkreislauf (11) unter einem im Wesentlichen zentralen Bereich des Bodens (2) befestigt sind.

3. Fahrzeug nach einem der Ansprüche 1 oder 2, **dadurch gekennzeichnet, dass** die elektrische Batterie (3) und der Kühlkreislauf (11) nebeneinander entlang einer Querachse Y des Fahrzeugs (1) angeordnet sind.

4. Fahrzeug nach einem der Ansprüche 1 bis 3, **dadurch gekennzeichnet, dass** der Kühlkreislauf (11) eine Wasserpumpe (12) und einen Chiller (13) umfasst.

5. Fahrzeug nach einem der Ansprüche 1 bis 4, **dadurch gekennzeichnet, dass** der Behälter (14), der Chiller (13) und die Wasserpumpe (12) über feste und starre Rohre (15, 16, 17) in Fluidverbindung stehen, die unter dem Boden in einem Raum zwischen dem Boden (2) und dem niedrigsten Punkt der Batterie (3) angeordnet sind.

6. Fahrzeug nach einem der Ansprüche 1 bis 5, **dadurch gekennzeichnet, dass** die Batterie (3) unter dem Boden (2) über ein Stützteil (5) in Form eines Käfigs gehalten wird, das sich entlang einer Längsachse X des Fahrzeugs erstreckende Segmente (6) und sich entlang einer Querachse Y des Fahrzeugs erstreckende Segmente (7) aufweist.

7. Fahrzeug nach einem der Ansprüche 1 bis 6, **dadurch gekennzeichnet, dass** die elektrische Batterie (3) und der Kühlkreislauf (11) unter dem Boden (2) in einem durch zwei Querträger (8, 9) begrenzten Raum befestigt sind.

## Claims

1. Vehicle (1) comprising a passenger compartment, a floor (2), an electric battery (3) having a no-load voltage less than or equal to 48 V that is fastened under said floor (2), and a liquid cooling circuit (11) for cooling said battery (3),
the cooling circuit (11) being fastened under the floor (2) of the vehicle (1) next to the battery (3), **characterized in that** said water cooling circuit (11) comprises a water container (14) provided with a cap, and **in that** the container (14) is placed under the floor (2) such that said cap corresponds to its uppermost part while remaining under said floor (2),
and **in that** the floor (2) is provided with a hatch (18) which is accessible from said passenger compartment and which is placed in line with the container (14) in order to allow access to the cap of said container (14), said hatch (18) being able to be rotated between a closed position in which it is in continuity with the floor (2) and an open position in which it projects from the floor (2) inside the passenger compartment.

2. Vehicle according to Claim 1, **characterized in that** the electric battery (3) and the cooling circuit (11) are fastened under a substantially central region of the floor (2).

3. Vehicle according to either of Claims 1 and 2, **characterized in that** the electric battery (3) and the cooling circuit (11) are placed side by side along a transverse axis Y of the vehicle (1).

4. Vehicle according to any of Claims 1 to 3, **characterized in that** the cooling circuit (11) comprises a water pump (12) and a chiller (13).

5. Vehicle according to any of Claims 1 to 4, **characterized in that** the container (14), the chiller (13) and the water pump (12) are in fluidic communication by means of solid and rigid pipes (15, 16, 17) placed under the floor in a space contained between said floor (2) and the lowermost point of the battery (3).

6. Vehicle according to any of Claims 1 to 5, **characterized in that** the battery (3) is held under the floor (2) by means of a support part (5) in the form of a cage having segments (6) extending along a longitudinal axis X of the vehicle and segments (7) extending along a transverse axis Y of the vehicle.

7. Vehicle according to any of Claims 1 to 6, **characterized in that** the electric battery (3) and the cooling circuit (11) are fastened under the floor (2) in a space delimited by two crossmembers (8, 9).
